(19) Europäisches Patentamt
European Patent Office
Office européen des brevets

(11) **EP 3 517 927 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **18196364.6**

(22) Anmeldetag: **24.09.2018**

(51) Int Cl.:
*G01M 17/10* *(2006.01)*     *B61L 15/00* *(2006.01)*
*G01M 7/08* *(2006.01)*     *G01M 17/013* *(2006.01)*
*B61K 9/12* *(2006.01)*

(54) **VERFAHREN UND VORRICHTUNG ZUR FRÜHERKENNUNG EINES RISSES IN EINEM RADSATZ FÜR EIN SCHIENENFAHRZEUG**

METHOD AND DEVICE FOR EARLY DETECTION OF A CRACK IN A WHEELSET FOR A RAIL VEHICLE

PROCÉDÉ ET DISPOSITIF POUR LE DIAGNOSTIC PRÉCOCE D'UNE FISSURE DANS UN ESSIEU D'UNE VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2018 EP 18153248**

(43) Veröffentlichungstag der Anmeldung:
**31.07.2019 Patentblatt 2019/31**

(73) Patentinhaber: **Vibro-Consult AG**
**5200 Brugg (CH)**

(72) Erfinder: **Bättig, Bruno**
**8212 Neuhausen am Rheinfall (CH)**

(74) Vertreter: **Herrmann, Johanna**
**Industrial Property Services GmbH**
**Rosenweg 14**
**4303 Kaiseraugst (CH)**

(56) Entgegenhaltungen:
DE-A1- 10 062 602     US-A1- 2013 312 524
US-A1- 2016 144 876     US-B2- 7 640 139

## Beschreibung

Hintergrund

Die vorliegende Erfindung betrifft ein Verfahren und eine Vorrichtung zur Früherkennung eines Risses in einem Radsatz für ein Schienenfahrzeug.

Die Geschichte der Eisenbahn kennt viele Ereignisse, wo defekte Radsätze zu tragischen Personenunfällen, zu Folgenschäden an Schienenfahrzeugen, Gleisanlagen und im Fahrbetrieb führten. Radsätze sind sicherheitskritische Komponenten und werden mit entsprechend hohen Anforderungen konstruiert, unterhalten und kontrolliert.

Bewährte Massnahmen zur Erreichung einer hohen Zuverlässigkeit sind eine Überdimensionierung sowie altersbedingter und zunehmend auch zustandsabhängiger Austausch der kritischen Komponenten.

Mit der technischen Entwicklung kamen neue Kontrollmöglichkeiten auf. Bezüglich der Rissprüfung von Wellen - wo der Fokus dieser Erfindung liegt - waren dies zum Beispiel optische, metallurgische, magnetische und radiologische Verfahren. Die Nachteile dieser Verfahren sind der De- und Montageaufwand, die mangelnde Zugänglichkeit, die Einschränkung auf Serviceintervalle, die beschränkte Aussagekraft (zum Beispiel zur Risstiefe), etc., sowie der generell grosse Aufwand.

Mit den Fortschritten in der Schwingungsmesstechnik ist heutzutage eine Überwachung von rotierenden Teilen einfach möglich und wird im Maschinenbau auch erfolgreich eingesetzt, in der Regel als Überwachung der Schwingungsamplituden. Bewährt hat sich auch die Überwachung von Wälzlagern und Getrieben, welche aber in der Bahntechnik noch nicht den allgemeinen Stand der Technik darstellt. Anspruchsvoller ist die Rissüberwachung von Wellen, da Risse erst im fortgeschrittenen Stadium das Laufverhalten der Wellen ändern.

Stand der Technik

In der Bahntechnik bekannt sind Verfahren und Vorrichtungen, welche an Radsatzlagern oder Drehgestellen gemessene Schwingungssignale auswerten. Das Beurteilungskriterium zur Feststellung von Defekten ist die Signalstärke, das heisst die Schwingungsamplitude (DE 198 37 554 A1).

Aus DE 100 22 684 A1, DE 198 27 271 A1 und WO 00/60322 A1 ist der Vergleich von gemessenen und historischen Spektren (Frequenzprofilen) bekannt, was einem frequenzweisen Vergleich der Schwingungsamplituden entspricht.

Aus DE 100 62 602 B4 ist der Vergleich zwischen erwarteten und gemessenen raddrehzahlharmonischen Signalanteilen bekannt. Auch hier werden Schwingungsamplituden verglichen.

Bei DE 100 62 602 A1 werden mit Beschleunigungssensoren die Schwingungen an den Radlagern eines Schienenfahrzeugs gemessen. Das gemessene Signal wird in raddrehharmonische und übrige Signalanteile aufgeteilt. In der Lernphase wird die Abhängigkeit der beiden Signalanteile gelernt. In einer Anwendungsphase wird die gelernte Abhängigkeit zur Überwachung des Fahrverhaltens verwendet.

Mit diesem Verfahren werden die Schwierigkeiten bei stark ändernden Signalstärken angegangen und defekte Schienenfahrzeugkomponenten können dabei erkannt werden, insbesondere Defekte an Rädern und Radlagern.

Dieses Verfahren nennt keine Methode, wie störende Signalanteile aus dem Nutzsignal entfernt werden, die beispielsweise infolge unterschiedlicher Schienenbeschaffenheit zwischen Lern- und Anwendungsphase im Nutzsignal enthalten sind. Das Nutzsignal ist zur Früherkennung von Rissen in Radsatzwellen nicht geeignet.

US 7 640 139 B2 zeigt ein Verfahren, wie Wälzlager überwacht werden können. Es ist ein Mitglied aus der grossen Familie der Wälzlagerüberwachungen. Überwachungskriterien sind Schwingungsamplituden von ausgewählten Frequenzen, welche von Wälzlagern im Schadenfall abgegeben werden.

Die Überwachung von Wälzlagern sowie die darin verwendeten Verfahren sind nicht Gegenstand dieser Erfindung.

Obigen Vorrichtungen gemeinsam sind die Schwingungsamplituden als Beurteilungskriterium, das heisst die Schwingungsstärke des Signals. Die Herausforderung, welche sich durch den grossen Dynamikumfang der betrieblichen Erschütterungen stellt, wird mit unterschiedlichen Signalaufbereitungsarten vor der Beurteilung angegangen.

Bei US 2013/0312524 A1 wird ein zweiteiliges Verfahren zur Überprüfung eines Rades eines vorbeifahrendes Schienenfahrzeug angewandt und akustische Resonanzen ausgewertet: Im ersten Teil werden Ultraschallwellen mit einem Transducer in das Rad abgegeben. Im zweiten Teil wird das Ultraschallecho mit einem Sensor aufgenommen und ausgewertet.

Transducer und Sensor sind an einem eigens dafür eingerichteten, als Prüfschiene ausgebildeten Schienenstück montiert. Zur Beurteilung des Rads wird das Spektrum des aktuell gemessenen Echos mit "guten" Spektren verglichen. Der räumliche Überwachungsbereich ist auf das Rad beschränkt.

Ein anderer Ansatz ist aus US 2016/0144876 A1 und WO 2010/057623 A2 bekannt. Ein an der Welle montierter Sensor rotiert mit der Welle mit und übermittelt Messdaten per Funk an das Schienenfahrzeug. Durch die Überwachung der Eigenresonanzfrequenz der Welle können Schäden oder variierende Belastung der Welle festgestellt werden. Genannt ist in diesem Dokument beispielsweise Rissbildung.

Das Dokument zeigt Wege auf, wie eine mit der Welle mitrotierende Messeinrichtung überhaupt montiert werden kann, mit ausreichend Energie versorgt werden kann und wie deren Messdaten übermittelt werden können. Diese Wege sind aufwändig und einschränkend.

Bei dem Verfahren mit einem mitdrehenden Aufnehmer stehen Schwingungsaufnehmer und Riss unter einem festen Winkel zueinander und rotieren synchron miteinander. Der Aufnehmer misst die Welle dadurch immer unter dem gleichen, einen Winkel, wodurch die rissbedingte Drehwinkelabhängigkeit einer Eigenfrequenz der Welle nicht erkannt werden kann.

Massnahmen zum Schutz der Welle, wie beispielsweise ein dem Aufnehmer unterlegtes Reifenprofil, begrenzen dessen Frequenzgang und damit die Auswertung von Eigenformen höherer Ordnung. Die Auswertung von Eigenformen höherer Ordnung erfordert ausserdem zusätzliche Rechenleistung und damit mehr Energie, während tiefere Eigenfrequenzen schwierig von antriebstypischen Anregungen zu unterscheiden sind.

Risstypische Signalanteile sind schwach gegenüber den stark variierenden Betriebsschwingungen und müssen zur Beurteilung gemessen, separiert und aufbereitet werden. Daher besteht Bedarf an einer konstruktiv einfachen und amplitudenunabhängigen Signalauswertung zur Rissüberwachung von Radsätzen.

Aufgabe der Erfindung

Es ist Aufgabe der Erfindung, ein Verfahren zu entwickeln, um Wellenrisse in Radsätzen von Schienenfahrzeugen frühzeitig festzustellen, sodass Achsbrüche mit hoher Zuverlässigkeit vermieden werden können.

Aufgabe der Erfindung ist es weiters, eine Vorrichtung zur Überwachung oder Zustandsdiagnose eines Radsatzes, beispielsweise einer Welle, bereitzustellen, welches ermöglicht, einen Defekt bereits zu erkennen, bevor es bei einer erhöhten Belastung zu einem möglichen Versagen des Radsatzes kommen kann.

Beschreibung der Erfindung

Die Lösung der Aufgabe der Erfindung erfolgt durch ein Verfahren zur Früherkennung eines Risses in einem Radsatz gemäss Anspruch 1. Die Lösung der Aufgabe erfolgt ferner durch eine Vorrichtung zur Überwachung oder Zustandsdiagnose eines Radsatzes gemäss Anspruch 10. Vorteilhafte Ausführungsbeispiele der Vorrichtungen sind Gegenstand der Ansprüche 11 bis 13. Bevorzugte Verwendungen der Vorrichtungen sind Gegenstand der Ansprüche 14 bis 15.

Radbeschädigungen, Radsatzlager- oder Getriebeschäden fallen durch abnormale Fahrgeräusche auf und ein verschlechtertes Laufverhalten kann auch mit bekannten schwingungssensor-basierten Überwachungssystemen festgestellt werden. Rissbildungen in Wellen sind schwieriger zu erkennen. Risse machen sich oft erst dann bemerkbar, wenn sie gross genug sind, sodass sich die äussere Form des Radsatzes und damit das Laufverhalten verändert. Die letzte Phase bis zum Schadenfall verläuft progressiv und ist vergleichsweise kurz.

Das vorliegende Verfahren basiert auf der Tatsache, dass ein Riss innere Eigenschaften der Welle verändert und diese wiederum deren Steifigkeit. Eigenformen (auch Eigenschwingungsform oder Schwingungsmode genannt) und die dazugehörigen Eigenfrequenzen sind solche Eigenschaften. Wenn die Welle zum Schwingen angeregt wird, können die Eigenfrequenzen mittels eines Schwingungssensors bestimmt werden.

Die für ungedämpfte, mechanische Schwingungen geltende Grundformel:

$$fE = \frac{1}{2\pi}\sqrt{\frac{c}{m}}$$

mit:

fE    Eigenfrequenz in [Hz]
c     Federkonstante (hier: Steifigkeit) in [N/m]
m     Masse in [kg]

zeigt die wesentlichen, Eigenfrequenz-bestimmenden Parameter, nämlich die Steifigkeit und die Masse. Für eine gegebene Radsatz-Geometrie, einer gegebenen Radsatz-Massenverteilung und einer bestimmten Ordnung der Eigenform gilt:

$$fE \sim \sqrt{c}$$

Es besteht somit ein direkter Zusammenhang zwischen Eigenfrequenz und Steifigkeit.

Bei den üblicherweise rotationssymmetrischen Wellen ist die Steifigkeit bezüglich allen Drehwinkeln gleich. Mit einem Riss verliert die Welle in der Regel ihre Rotationssymmetrie wobei die Steifigkeit eine Abhängigkeit vom Drehwinkel bekommt. Dieses Verhalten kann zur Rissdetektion ausgenutzt werden.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Verfahren sowie die erfindungsgemässe Vorrichtung zur Überwachung oder Zustandsdiagnose eines Radsatzes. Die Beschreibung einer bestimmten Vorrichtung eines bestimmten Verfahrens ist nur als beispielhaft anzusehen. In der Beschreibung und den Ansprüchen werden die Begriffe "enthalten", "umfassen", "aufweisen" als "enthalten, aber nicht beschränkt auf" interpretiert.

Im Folgenden wird der Begriff Rissgrösse für einen oder mehrere Risse oder die Summe der Rissgrössen der Risse verwendet.

Wenn im Folgenden der Begriff Eigenfrequenz oder Resonanzfrequenz verwendet ist, so ist damit die Eigenresonanzfrequenz der Eigenform einer bestimmten Ordnung gemeint.

Im Folgenden bedeutet der Begriff Verschiebung im Zusammenhang mit der Eigenfrequenz eine einmalige oder mehrmalige Änderung der Eigenfrequenz. Die Eigenfrequenz nimmt dabei nacheinander mindestens zwei unterschiedliche Frequenzen an. Darunter fällt zum Beispiel ein Pendeln zwischen zwei unterschiedlichen Frequenzen oder ein Wechsel zwischen einer früheren und einer aktuellen Frequenz. Im gleichen Zusammenhang bedeutet der Begriff "Differenz" das Mass der Änderung oder den Unterschied zwischen den unterschiedlichen Frequenzen. Der Unterschied kann beispielsweise durch Veränderung der Wellendrehwinkels oder durch zeitliche Veränderung der Welleneigenschaften entstehen.

Der Begriff Radsatz umfasst auch Teile des Radsatzes, beispielsweise die Welle oder die Räder.

Für den Begriff Eigenform sind auch die gleichbedeutenden Begriffe Eigenschwingungsform, Schwingungsmode oder Mode gebräuchlich.

Der Begriff Ordnung dient der Nummerierung der verschiedenen Eigenformen. In der eindimensionalen Betrachtungsweise hat die Grundschwingung die erste Ordnung und die tiefste Eigenfrequenz. Höhere Ordnungen zeichnen sich durch höhere Eigenfrequenzen aus.

Unter Schwingungssensor, auch Schwingungsaufnehmer genannt, wird ein Messaufnehmer für die Messgrösse Schwingweg oder Schwinggeschwindigkeit oder Schwingbeschleunigung verstanden. Diese Erfindung verwendet einen "fest montierten Schwingungssensor". Damit ist gemeint, dass er beispielsweise am Radlagergehäuse oder am Getriebegehäuse montiert ist und nicht mit dem Radsatz mitrotiert.

Das erfindungsgemässe Verfahren dient zur Früherkennung eines Risses in einem Radsatz für ein Schienenfahrzeug. Ein fest montierter Messaufnehmer erzeugt aufgrund einer Erschütterung des Radsatzes ein Messsignal. Aus dem Messsignal wird eine Verschiebung einer Eigenfrequenz einer Eigenform höherer Ordnung des Radsatzes zur Feststellung oder Beurteilung des Risses ermittelt, wobei die Erschütterung, die beim Betrieb des Radsatzes auftritt, zur Anregung der höheren Eigenform genutzt wird.

Unter Früherkennung ist hierbei insbesondere die frühzeitige Feststellung der Existenz oder der Veränderung eines Risses zu verstehen, auch als Rissbildung bezeichnet. Unter Beurteilung der Rissbildung ist eine Erfassung der Charakteristiken des Risses zu verstehen, welche die Lage des Risses auf dem Radsatz, die Eindringtiefe des Risses in den Radsatz, die Länge des Risses auf der Oberfläche oder im Inneren des Radsatzes, die Breite des Spalts, welche durch den Riss gebildet wird, sowie die zeitliche Veränderung zumindest einer der vorgenannten Charakteristiken umfassen kann. Vereinfacht und verallgemeinert handelt es sich um die frühzeitige Feststellung der Änderung der Anzahl, Lage oder Form des/der Risse.

Im Fahrbetrieb ist der Radsatz Erschütterungen ausgesetzt, welche von ihm selber, vom Fahrzeug oder vor allem vom Gleis (zum Beispiel Schienenstösse, Schienendefekte, Weichen, Kurvenfahrt) verursacht werden.

Es treten im Fahrbetrieb sehr schwache bis sehr starke Erschütterungen auf, welche Schwingungssignale mit kleinen (z.B. 2) bzw. grossen (z.B. 2000) Amplituden erzeugen. Der Dynamikumfang, also das Amplitudenverhältnis der Schwingungssignale, beträgt für dieses hypothetische Beispiel 1000 (2000/2). Ein grosser Dynamikumfang stellt für die eingesetzte Messtechnik und Auswertung eine Herausforderung dar. Einige Verfahren aus dem Stand der Technik erfassen die Grösse der Amplitude der Schwingungssignale, welche dem grossen Dynamikumfang unterworfen sind. Aus einer Veränderung der Amplitude kann kein Rückschluss auf eine Veränderung der Frequenz des Schwingungssignals abgeleitet werden. Erschütterungsamplituden, die beim Betrieb des Radsatzes auftreten, werden zur Anregung der Eigenform genutzt. Die erforderlichen Messungen der Verschiebung der Eigenfrequenzen sind in einem grossen Dynamikbereich von Erschütterungsamplituden, welche durch den Fahrbetrieb bedingt sind, möglich. Insbesondere kann mittels des Verfahrens auf die Überwachung der Grösse von Schwingungsamplituden verzichtet werden.

Ein Merkmal der Erfindung ist, dass der Schwingungsaufnehmer fest montiert ist. In dieser Anordnung dreht sich die Welle - und mit ihr ein allfälliger Riss - gegenüber dem Aufnehmer. Die bevorzugte Messrichtung ist zudem vertikal, in welcher die stärksten Anregungen auftreten. Dadurch scannt der Aufnehmer bei jeder Radumdrehung gleichberechtigt sämtliche Raddrehwinkel. Ein auswertbares Merkmal eines Risses bei diesem Verfahren ist, dass sich die beobachtete Eigenfrequenz der Welle periodisch und synchron mit dem Raddrehwinkel ändert.

Im Fahrbetrieb setzten sich die Schwingungssignale aus unterschiedlichen Frequenzanteilen zusammen. Ein Teil davon sind antriebstypische Frequenzanteile, welche abnutzungsbedingt oder konstruktionsbedingt sind und in keinen direkten Zusammenhang mit risstypischen Frequenzanteilen stehen. Die Quellen solcher antriebstypischer Frequenzanteile sind beispielweise Rad-Flachstellen, Rollen der Radlager oder Zähne der Getriebezahnräder. Ein Merkmal der Erfindung ist, dass sie zur Rissdetektion Eigenfrequenzen höherer Ordnung auswertet, welche frequenzmässig oberhalb der antriebstypischen Frequenzanteile liegen.

In einem Ausführungsbeispiel kann bei einem rotationssymmetrischen Radsatz die Verschiebung der Eigenfrequenzen von der Eigenfrequenzrotationssymmetrie bezüglich des Raddrehwinkels zur Rissbeurteilung verwendet werden. Insbesondere kann das Verfahren für rotationssymmetrische Radsätze zur Rissüberwachung im Fahrbetrieb oder im Werk eingesetzt werden.

In einem anderen Ausführungsbeispiel kann bei einem Radsatz die Verschiebung der Eigenfrequenzen höherer Ordnungen gegenüber früheren Messungen zur Rissbeurteilung verwendet werden. Insbesondere kann das Verfahren für Radsätze zur Rissüberwachung im Fahrbetrieb oder im Werk eingesetzt werden.

Nach einem Ausführungsbeispiel können Eigenformen ab der 5. Ordnung Verhältnisse zwischen Nutz- und Stör-Signalanteilen liefern, welche sich zur Auswertung eignen. Nach einem Ausführungsbeispiel kann eine Eigenform höherer Ordnung zur Rissdetektion verwendet werden, deren Resonanzfrequenz in den leistungsmässig oberen 10% des gemessenen Spektrums liegt. Nach einem Ausführungsbeispiel kann eine Eigenform höherer Ordnung zur Rissdetektion verwendet werden, deren Resonanzfrequenz im Frequenzbereich über den antriebstypischen Anregungen liegt.

Insbesondere kann mittels des Verfahrens nach einem der Ausführungsbeispiele die Existenz eines Risses im Radsatz festgestellt werden, ohne dass die Position oder Lage des Risses bekannt sein muss. Ein Riss kann an einer beliebigen Position oder Lage im Radsatz detektiert werden. Die Lokalisierung des Risses kann - sofern von Interesse - nachträglich erfolgen. Mit einem Verfahren nach einem der Ausführungsbeispiele können sämtliche Rissarten festgestellt werden, da alle die Steifigkeit reduzieren. Rissarten umfassen Risse in beliebiger räumlicher Lage und Orientierung oder Risse infolge Biege- oder Torsions-Überbelastung mit ihren typischen Erscheinungsbildern.

Insbesondere können mittels des Verfahrens nach einem der Ausführungsbeispiele Risse erkannt werden, ohne dass am Radsatz bereits plastische Verformungen aufgetreten sein müssen.

Veränderungen der Welle durch Risse haben Verschiebungen der Eigenfrequenzen zur Folge. Je grösser der Riss und umso mehr Risse vorhanden sind, umso mehr verschieben sich Eigenfrequenzen im Spektrum und können mit diesem Verfahren detektiert werden.

Mit der Verschiebung der Eigenfrequenz, sei es in Abhängigkeit des Raddrehwinkels oder in Abhängigkeit der Zeit, steht somit ein Mass zur quantitativen Abschätzung der Rissgrösse, sowie zur Beobachtung und Prognose des zeitlichen Verlaufs der Rissgrösse, das heisst der Rissentwicklung, zur Verfügung.

Nach einem Ausführungsbeispiel kann ein Radsatz im Werk kontrolliert werden, wobei die Anregung der Eigenform durch eine stationäre, mechanische Prüfeinrichtung erfolgt. Gemäss diesem Ausführungsbeispiel werden Erschütterungen, die durch eine stationäre, mechanische Prüfeinrichtung ausgelöst werden, zur Anregung der Eigenform genutzt. Wird die Eigenform unter verschiedenen Drehwinkeln angeregt, kann die Rotationsasymmetrie der Eigenfrequenz zur Rissüberwachung ausgenutzt werden. Auch eine zeitliche Veränderung der Eigenfrequenz gegenüber früheren Messungen kann zur Rissüberwachung ausgenutzt werden. Das Verfahren kann somit zur Rissüberwachung im Fahrbetrieb oder im Werk eingesetzt werden.

Ein Verfahren nach einem der vorhergehenden Ausführungsbeispiele hat den Vorteil, dass ein Radsatz gleichzeitig im aktuellen Zustand auf Veränderung der Rotationsasymmetrie der Eigenfrequenz oder auf Veränderung des Zustandes gegenüber früheren Messungen durch die Verschiebung der Eigenfrequenz über den Verlauf der Zeit überwacht werden kann. Somit stehen zwei unabhängige Kriterien zur Beurteilung des Zustandes des Radsatzes zur Verfügung.

Ein Verfahren nach einem der vorhergehenden Ausführungsbeispiele hat den Vorteil, dass es bereits mit einem einzigen Schwingungssensor pro Radsatz funktioniert.

Ein Verfahren nach einem der vorhergehenden Ausführungsbeispiele hat den Vorteil, dass ein Messsignal eines Schwingungssensors zur gleichzeitigen Überwachung verschiedener Eigenformen auf risstypische Veränderungen verwendet werden kann.

Unterliegen die Eigenfrequenzen bekannten oder erlernbaren Einflüssen durch Randbedingungen, kann das Verfahren durch Kompensation der Einflüsse bezüglich Empfindlichkeit, Sicherheit, Reaktionszeit, Fehlalarm-Anfälligkeit, etc. zusätzlich verbessert werden. Beispiele für Einflüsse sind Radabnutzung oder Umgebungstemperatur.

Eine Vorrichtung zur Überwachung oder Zustandsdiagnose eines Radsatzes auf Risse enthält einen fest auf dem Schienenfahrzeug montierten Schwingungssensor, der bei mechanischer Anregung ein Schwingungssignal an die Überwachungseinheit abgibt, welche daraus das Signal ΔfEN einer Eigenfrequenz einer Eigenform höherer Ordnung, ermittelt. Das Signal ΔfEN ist ein Mass für die aktuelle Schwächung des Radsatzes durch Rissbildung. Somit ist der Zustand des Radsatzes bezüglich Festigkeit durch das Signal ΔfEN beurteilbar.

Zur Beurteilung des Zustands des Radsatzes verwendet dieses Verfahren die Verschiebungen der Eigenfrequenzen von Eigenformen im Gegensatz zur Überwachung von Schwingungsamplituden mittels Amplitudengrenzwerten, welche auf alle oder auf ausgewählte Frequenzanteile angewandt wird.

Der Schwingungssensor kann am oder nahe beim Radsatz angebracht sein, ist aber nicht mitdrehend.

Vorteilhafte Montageorte sind an den stationären Gehäusen von Radlagern oder Getriebelagern.

Als Schwingungssensor kommen eine Vielfalt gängiger Schwingweg-, Schwinggeschwindigkeits- und Schwingbeschleunigungs-Sensoren unterschiedlicher Messprinzipien in Frage.

In der Überwachungseinheit wird das Schwingungssignal in einem Rechner mit allgemein bekannten mathematischen und/oder nummerischen Verfahren analysiert. Die mathematischen und/oder numerischen Verfahren enthalten insbesondere zumindest ein Element aus der Gruppe der Fourier-Transformation, Filterung, Normierung, Mittelung und Gewichtung.

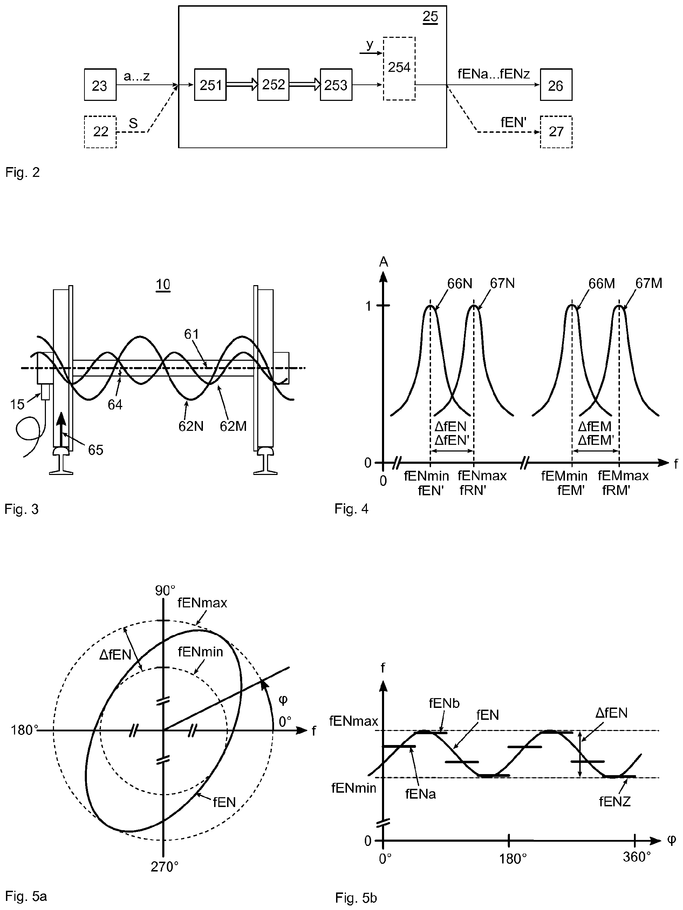

Bei einer runden Welle ist - unter der Voraussetzung, dass die Welle aus einem homogenen Material besteht - die Steifigkeit rotationssymmetrisch bezüglich der Drehachse, also konstant über den Umfang. Risse sind in der Regel nicht rotationssymmetrisch und verursachen für eine Eigenform von bestimmter Ordnung unterschiedliche Eigenfrequenzen, welche abhängig von der Richtung der Anregung in Bezug auf die Umfangsposition resp. den Raddrehwinkel $\varphi$ sind, wie Fig. 5a zeigt. Die Rotationsasymmetrie der Eigenfrequenzen, beispielsweise der Ordnung N, kann bestimmt und zur Rissbeurteilung verwendet werden. Das Kriterium kann zum Beispiel die Differenz $\Delta fEN$ zwischen maximaler und minimaler Eigenfrequenz $fENmax$, $fENmin$ sein. Mit dieser Beurteilung können Materialinhomogenitäten, insbesondere Risse, feststellt werden, auch wenn noch keine historischen Eigenfrequenzen bekannt sind, wie zum Beispiel bei neuen oder erstmals geprüften Wellen.

Insbesondere kann der Zustand der Welle ohne Kenntnisse eines früheren Zustandes feststellbar und/oder beurteilbar sein. Insbesondere kann die Vorrichtung dazu verwendet werden, ohne Kenntnisse eines früheren Zustandes Risse festzustellen und/oder zu beurteilen.

Nach einem Ausführungsbeispiel kann der Schwingungssensor mit einem Vorfilter verbindbar sein, wobei im Vorfilter ein vorgefiltertes Schwingungssignal generierbar ist, wobei das vorgefilterte Schwingungssignal in einem Analog/Digitalwandler digitalisierbar ist, wodurch ein digitalisiertes Schwingungssignal S erhältlich ist.

Das Schwingungssignal S kann nach einem Ausführungsbeispiel in einer Segmentierungseinheit in eine Mehrzahl von Segmenten, beispielsweise in die Segmente a bis z zerlegt werden. Die Segmentierung erfolgt gemäss diesem Ausführungsbeispiel radwinkelabhängig. Die Segmente sind mittels je einer Fourier-Transformation in die spektralen Formen transformierbar, um daraus in nachfolgenden Signalaufbereitungen Nutzspektren zu berechnen. Aus den Nutzfrequenzen sind mit je einer zugehörigen Resonanzfrequenzmessung die Eigenfrequenzen, beispielsweise $fENa$ bis $fENz$, einer bestimmten Eigenform einer höheren Ordnung ermittelbar, von denen in einem Selektor die höchste ermittelte Eigenfrequenz $fENmax$ und die niedrigste ermittelte Eigenfrequenz $fENmin$ bestimmbar ist und daraus in einem Subtrahierer die Eigenfrequenz-Differenz $\Delta fEN = fENmax - fENmin$ berechenbar ist. Insbesondere ist die Eigenfrequenz-Differenz $\Delta fEN$ ein Mass für die Anzahl oder Grösse der vorhandenen Risse und kann zur Beurteilung des Zustandes des Radsatzes verwendet werden.

Eine Signalaufbereitung kann eine Filterung, Normierung, Mittelung, Gewichtung enthalten.

Im Minimum wird eine Eigenform überwacht. Jeder Radsatz kann mehrere, zur Überwachung geeignete Eigenformen besitzen, jede mit ihrer charakteristischen Eigenfrequenz. Es können mit einer Überwachungseinheit gleichzeitig mehrere von einem Sensor gemessene Eigenformen, insbesondere Eigenformen höherer und/oder tieferer Ordnung, überwacht werden, beispielsweise zur Plausibilisierung oder Verifikation der Beurteilung, zur Erhöhung von Sicherheit, Zuverlässigkeit oder Empfindlichkeit, zur Verbesserung der Reaktionszeit oder zum Vermeiden von Fehlalarmen. Nach einem Ausführungsbeispiel kann aus den Segmenten eine Eigenfrequenz-Differenz $\Delta fEM$ für eine andere Eigenform höherer Ordnung, beispielsweise gekennzeichnet durch den Index M, berechnet werden und in analoger Weise wie $\Delta fEN$ zur Beurteilung des Radsatzes verwendet werden.

Bei einer Vorrichtung nach einem anderen Ausführungsbeispiel kann in der Überwachungseinheit aus dem digitalisierten Schwingungssignal S in einer Resonanzfrequenzbestimmung die Eigenfrequenz $fEN'$ einer Eigenform höherer Ordnung N ermittelbar sein. Eine Differenz $\Delta fEN'$ der Eigenfrequenz $fEN'$ zu einer früher ermittelten Referenz-Eigenfrequenz $fRN'$ der gleichen Ordnung kann ermittelt werden. Die Verschiebung $\Delta fEN'$ ist ein Mass für die zwischenzeitlich erfolgte Schwächung des Radsatzes durch Rissbildung. Somit ist der Zustand des Radsatzes bezüglich Festigkeit durch die Verschiebung der Eigenfrequenz $\Delta fEN'$ beurteilbar.

In der Resonanzfrequenzbestimmung kann das digitalisierte Schwingungssignal S mittels Fourier-Transformation in die spektrale Form transformierbar sein, wobei in einer nachfolgenden Signalaufbereitung ein Nutzspektrum berechenbar ist.

Eine Signalaufbereitung kann eine Filterung, Normierung, Mittelung, Gewichtung enthalten.

Bekannte oder erlernte Einflüsse von Randbedingungen können auf die Eigenfrequenzen $fEN'$ vor dem Vergleich mit der Referenz-Eigenfrequenz $fRN'$ korrigierbar sein. Eine Randbedingung kann beispielsweise die Radsatztemperatur oder die Radabnutzung sein. So ist zum Beispiel bekannt, dass der Elastizitätsmodul von Stahl mit steigender Temperatur sinkt. Wenn $fEN'$ und $fRN'$ bei unterschiedlichen Radsatztemperaturen gemessen werden, so repräsentiert die daraus berechnete Verschiebung der Eigenfrequenz $\Delta fEN'$ nicht genau die tatsächliche Rissbildung. Da der Temperatureinfluss auf die Eigenfrequenz bekannt ist, kann die unkorrigierte Eigenfrequenz um den Temperatureinfluss nach oben oder unten korrigiert werden, was die korrigierte Eigenfrequenz fEN' ergibt, womit fEN' und fRN' auf der gleichen Bezugstemperatur basieren und das daraus berechnete ΔfEN' das Mass der Rissbildung besser repräsentiert.

Im Minimum wird eine Eigenform überwacht. Jeder Radsatz kann mehrere, zur Überwachung geeignete Eigenformen besitzen, jede mit ihrer charakteristischen Eigenfrequenz. Nach einem Ausführungsbeispiel kann aus dem Signal S gleichzeitig eine Eigenfrequenz-Differenz ΔfEM' für eine andere Eigenform höherer Ordnung, beispielsweise gekennzeichnet durch den Index M, berechnet werden und in analoger Weise wie ΔfEN, ΔfEM oder ΔfEN' zur Beurteilung des Radsatzes verwendet werden.

Die Differenz, welche der Verschiebung der Eigenfrequenz ΔfEN' entspricht, ist ein Mass für die Schwere der Beschädigung. Die Beschädigung kann beispielsweise einen Riss umfassen, insbesondere einen seit dem Beginn der Überwachung gebildeten Riss. Die Verschiebung der Eigenfrequenz ΔfEN' kann zur Beurteilung eines Zustandes, beispielsweise der Festigkeit, des Radsatzes verwendet werden. Somit ist der Zustand des Radsatzes durch die Verschiebung der Eigenfrequenz ΔfEN' beurteilbar. Unter dem Zustand wird das Mass oder der Fortschritt der Schwächung durch den oder die Risse verstanden. Das heisst, der Zustand zeigt die Funktionstüchtigkeit, beispielsweise die verbleibende Festigkeit, des Radsatzes.

Die Vorrichtung nach einem Ausführungsbeispiel kann mit einem einzigen Schwingungssensor den Radsatz überwachen.

Die Vorrichtung nach jedem der Ausführungsbeispiele kann ohne weitere Hardware auf die Überwachung weiterer Schadensarten wie Radbeschädigungen, Radsatzlager- oder Getriebeschäden, Entgleisung, Gleisschäden, etc. erweitert werden.

Die Vorrichtung kann mit einem oder mehreren weiteren Sensoren zu einer ganzheitlichen Radsatz-, Drehgestell-, Fahrzeug- oder Gleisüberwachung erweitert werden.

Die Vorrichtung nach einem der Ausführungsbeispiele kann eine Überwachung der eigenen Funktionsfähigkeit umfassen. Insbesondere kann ein Mangel wie beispielsweise eine Fehlfunktion oder ein Funktionsausfall die Funktionsfähigkeit beeinträchtigen.

Eine Vorrichtung kann eine oder mehrere Komponenten umfassen. Insbesondere kann eine Komponente ein Teil eines Verfahrens oder einer Vorrichtung oder eines Anwendungsbeispiels sein. Insbesondere kann eine Komponente eine zu andern Komponenten alternativ oder ergänzend angewandte Beurteilung des Zustandes des Radsatzes bilden. Beispielsweise kann eine Vorrichtung eine Eigenfrequenz-Differenz ΔfE und gleichzeitig die Verschiebung der Eigenfrequenz ΔfE' überwachen.

Das Verfahren dient insbesondere dazu, Achsbrüche zu verhindern.

Das Verfahren ist insbesondere geeignet zur kontinuierlichen Rissüberwachung im laufenden Fahrbetrieb. Dazu reicht bereits ein einziger Schwingungssensor, welcher permanent an geeigneter Stelle auf oder in der unmittelbaren Nähe des Radsatzes angebracht ist und dessen Signal von einer Überwachungseinheit analysiert wird. Die Eigenfrequenzen des Radsatzes werden dabei unter Ausnutzung der betrieblichen Erschütterungen ermittelt und auf Frequenzverschiebungen hin überwacht. Ein Vorteil dieser Anwendung ist die Beherrschung von hochdynamischen Schwingungsamplituden, wie sie beispielsweise im Bahnverkehr auftreten.

Die Vorrichtung nach einem der Ausführungsbeispiele kann somit zur Überwachung eines Radsatzes von Schienenfahrzeugen auf eine Schadensart aus der Gruppe der Risse, Radbeschädigungen, Radsatzlager- oder Getriebeschäden, Entgleisungen verwendet werden.

Die Vorrichtung nach einem der vorhergehenden Ausführungsbeispiele findet beispielsweise Verwendung für ein in Betrieb befindliches Schienenfahrzeug oder zur Kontrolle von Radsätzen im Werk.

Alternativ oder ergänzend kann das Verfahren für Einzelmessungen im Werk, wie zum Beispiel bei Kontrollen im Unterhaltsintervall des Radsatzes angewandt werden. Dabei können temporäre oder permanente Sensoren eingesetzt werden. Zur mechanischen Anregung der Eigenfrequenzen können bekannte Methoden wie zum Beispiel Schlag, Einsatz von Schüttlern, sowie Testfahrten zur Anwendung kommen.

Das Verfahren eignet sich somit zur Kombination mit weiteren Überwachungsverfahren im Sinne von Erweiterungs- oder als Backup-Funktionen. Beispiele von bekannten Verfahren aus der Maschinenindustrie oder Bahntechnik sind: Lager -, Getriebe-, Radbruch-, Achsbruch-, Entgleisungs- oder GleisÜberwachung.

Kurzbeschreibung der Zeichnungen

Nachfolgend werden die erfindungsgemässen Verfahren, sowie zugehörige Vorrichtungen anhand einiger Ausführungsbeispiele dargestellt. Es zeigen

Fig. 1 einen schematischen Aufbau einer Vorrichtung nach einem Ausführungsbeispiel, wobei zwei unterschiedliche Auswerteverfahren zur Anwendung kommen können,

Fig. 2 Details des in Fig. 1 mehrfach vorkommenden Blockes 25 zur Bestimmung der Eigenfrequenzen,

Fig. 3 einen Radsatz 10 welcher mit Sensor 15 überwacht wird, das Wellenzentrum 61 im Ruhezustand und mit zwei der möglichen Eigenformen 62N und 62M sowie ein möglicher Riss 64,

Fig. 4 den allgemeinen Fall einer Eigenfrequenzverschiebung ΔfE der Eigenformen von N-ter und M-ter Ordnung im Spektrum,

Fig. 5a ein Polardiagramm der rotationsasymmetrischen Eigenfrequenz fEN bei angerissener Welle,

Fig. 5b ein Diagramm zur Ermittlung der Rotationsasymmetrie der Eigenfrequenz ΔfEN gemäss Baugruppe 50 in Fig. 1.

Detaillierte Beschreibung der Zeichnungen

In den Figuren sind einige Elemente gestrichelt gezeichnet. Es handelt sich dabei um Optionen, welche alternativ oder zusätzlich zur durchgezogen gezeichneten Ausgangsvariante möglich sind.

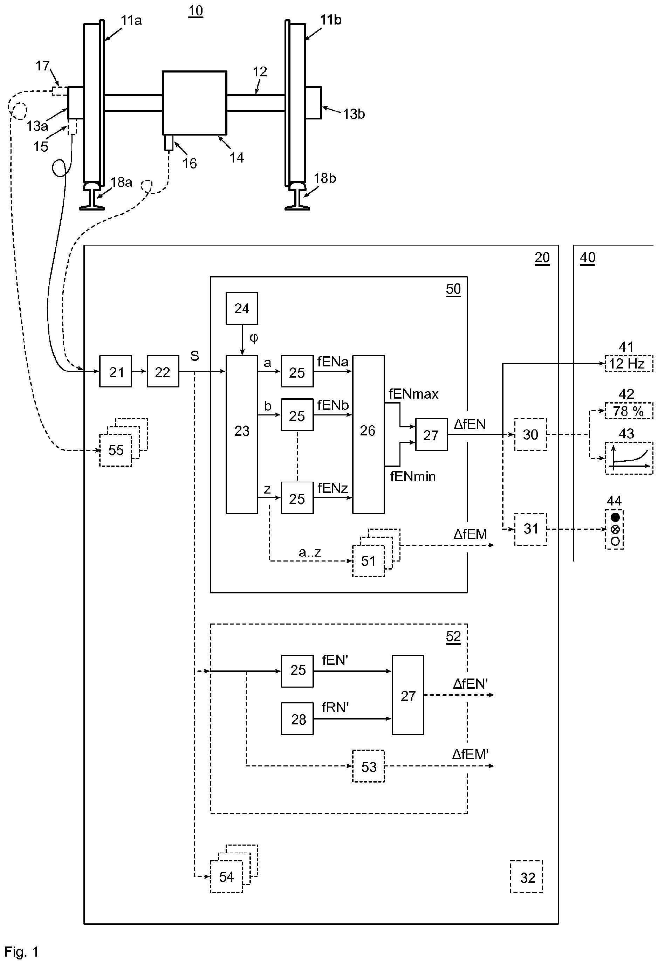

Fig. 1 zeigt einen schematischen Aufbau einer beispielhaften Vorrichtung, bestehend aus dem überwachten Radsatz 10, der Überwachungseinheit 20 und der Meldeeinheit 40.

Der Radsatz 10 besteht aus den Rädern 11a, 11b, der Welle 12, den Radsatzlagern 13a, 13b und dem Getriebe 14. Er steht auf den Schienen 18a, 18b.

Ein Schwingungssensor 15 ist fest montiert, beispielsweise auf dem Radsatzlager 13a. Ein alternativer Montageort 16 für den Schwingungssensor ist auf dem Getriebe 14. In Frage kommen auch weitere Stellen, an welchen Radsatz-Eigenfrequenzen messbar sind. Alle Schwingungssensoren sind auf festen Teilen des Radsatzes montiert und nicht mit der Welle oder den Rädern mitdrehend, damit eine einfache Stromversorgung und Datenkommunikation per Kabel möglich ist. Der Zusatzsensor 17 ist weiter unten mit Option 55 erläutert.

Der Schwingungssensor 15 ist an der Überwachungseinheit 20 angeschlossen. Das Signal des Schwingungssensors 15 wird im Vorfilter 21 vorgefiltert und im Analog/Digitalwandler 22 digitalisiert, wodurch das Schwingungssignal S entsteht.

Die Baugruppe 50 (zugehörige Diagramme Fig. 5a und 5b) zeigt ein Ausführungsbeispiel für eine Vorrichtung, mittels welcher die Rotationsasymmetrie einer Eigenfrequenz zur Rissbeurteilung ermittelt werden kann. Voraussetzung für dieses Ausführungsbeispiel bei der Anwendung im Fahrbetrieb ist eine Raddrehwinkelerfassung 24, bei welcher der Raddrehwinkel φ gemessen oder aus dem Schwingungssignal S abgeleitet wird. In Baugruppe 50 wird Schwingungssignal S der Segmentierung 23 zugeführt und bei jeder Radumdrehung in die Winkel- resp. Zeit-Segmente a bis z (a=1, z ≥3, hier als Beispiel: z=8) aufgeteilt. Aus jedem Segment wird in der Eigenfrequenzermittlung 25 (Details in Fig. 2) die Eigenfrequenz einer Eigenform mit höherer Ordnung (hier beispielsweise als N bezeichnet) ermittelt. Als vorteilhaft haben sich Ordnungen mit N=5 oder höher erwiesen. Beispielsweise wird aus Segment a die Eigenfrequenz fENa der N-ten Ordnung ermittelt. Ebenso werden die Eigenfrequenzen fENb bis fENz ermittelt. Im Minimal-/Maximalwert-Selektor 26 wird die höchste und niedrigste Eigenfrequenz fENmax, fENmin ausgewählt und im Subtrahierer 27 die Eigenfrequenz-Differenz ΔfEN berechnet. ΔfEN ist ein Mass für die Anzahl und Grösse der Risse in der Welle.

Eine Meldeeinheit 40 zeigt verschiedene Darstellungsarten für die Eigenfrequenz-Differenz ΔfEN, zum Beispiel als Direktanzeige 41 in [Hz]. Optional kann ΔfEN nach anwendungsspezifischer Skalierung 30 auch als "Rissindex" in [%] in Anzeige 42 oder in Trendanzeige 43 visualisiert werden. Die optionale Beurteilung 31 vergleicht ΔfEN mit Frequenz-Grenzwerten und steuert die Ampel 44 an. In Analogie zu einer Verkehrsampel können beispielsweise die optischen Anzeigen rot, gelb oder grün sein. Die rote Anzeige signalisiert Gefahr, die gelbe Anzeige signalisiert eine Vorwarnung und die grüne Anzeige signalisiert, dass der Radsatz frei von Schäden, insbesondere frei von Rissen ist.

Option 51 zeigt zusammengefasst, wie aus den Segmenten a bis z in gleicher Weise die Eigenfrequenz-Differenz ΔfEM einer weiteren Ordnung (hier beispielsweise als M bezeichnet) ermittelt werden kann.

Analog zur Eigenfrequenz -Differenz ΔfEN wird ΔfEM von der Meldeeinheit 40 angezeigt.

Das Verfahren sowie die zugehörige Vorrichtung kann auch zur Kontrolle von Radsätzen im Werk eingesetzt werden. Die Kontrolle kann am stillstehenden Schienenfahrzeug oder am ausgebauten Radsatz erfolgen. Unter mehreren, unterschiedlichen Raddrehwinkeln, entsprechend den Segmenten a bis z, kann die Welle mit einer Prüfeinrichtung zum Schwingen angeregt und die Eigenfrequenzen gemessen werden. Zur Beurteilung des Zustandes der Welle werden damit Eigenfrequenz-Differenzen ΔfEN, ΔfEM der höheren Ordnungen N, M bestimmt.

Die Baugruppe 52 zeigt ein Ausführungsbeispiel für eine Vorrichtung, mittels welcher eine Verschiebung einer Eigenfrequenz zur Rissbeurteilung ausgewertet werden kann. Die Signale in Baugruppe 52 sind zur Unterscheidung zur Baugruppe 50 mit einem Apostroph (') gekennzeichnet.

Aus dem Schwingungssignal S wird in der Eigenfrequenzermittlung 25 (Details in Fig. 2) die Eigenfrequenz fEN' einer Eigenform mit höherer Ordnung N ermittelt. Als vorteilhaft haben sich Ordnungen mit N=5 oder höher erwiesen.

Der Referenzwertspeicher 28 gibt einen Eigenfrequenz-Referenzwert fRN' der gleichen Ordnung N ab. Dieser kann ein fester Wert sein oder variable Einflusskorrekturen enthalten. Idealerweise repräsentiert er den gesunden Radsatz bei Standard-Randbedingungen und basiert zum Beispiel auf einer Eigenfrequenzmessung am gesunden Radsatz im Neuzustand. Im Subtrahierer 27 wird die Verschiebung der Eigenfrequenz ΔfEN' = fRN' - fEN' berechnet. ΔfEN' ist ein Mass für die Anzahl und Grösse der Risse in der Welle.

Analog zur Eigenfrequenz -Differenz ΔfEN aus Baugruppe 50 wird ΔfEN' von der Meldeeinheit 40 angezeigt.

Option 53 zeigt zusammengefasst, wie aus dem Schwingungssignal S in gleicher Weise die Verschiebung der Eigenfrequenz ΔfEM' einer weiteren Ordnung (hier beispielsweise als M bezeichnet) ermittelt werden kann.

Analog zur Eigenfrequenz -Differenz ΔfEN aus Baugruppe 50 wird ΔfEM' von der Meldeeinheit 40 angezeigt.

Option 54 zeigt zusammengefasst, wie der Radsatz auf einfache Art mit dem gleichen Sensor 15 auf weitere Schadensarten überwacht werden kann. Zum Beispiel kann die Signalamplitude des Schwingungssignals S überwacht werden, um Defekte an Rad, Radsatzlager, Getriebe und Achse sowie Entgleisung festzustellen. Diese Überwachung ist ohne weitere Sensoren möglich, da sich die Schwingungen auf dem ganzen Radsatz ausbreiten. Wenn abnormal starke Schwingungen gemessen werden, wird der Lokführer alarmiert. Diese Art von Überwachung ist allgemein bekannt und wird zur Vermeidung oder Verminderung von Folgeschäden eingesetzt. Weitere Überwachungen werten beispielsweise radsatzlager- oder getriebe-typische Schwingungsanteile oder Schwingungsmuster im Schwingungssignal S, welche Defekte oder einsetzende Verschleisserscheinungen frühzeitig melden, damit das Fahrzeug geplant ausser Betrieb genommen werden kann. Auch diese Verfahren sind bekannt und werden bei grösseren Maschinen erfolgreich eingesetzt.

Interessant an Option 54 ist, dass sie ohne weitere Hardware auskommt, die ohnehin vorhandene Überwachungs-Infrastruktur nutzt und die Rissüberwachung zu einer Allin-One-Überwachung ergänzt.

Option 55 zeigt, wie weitere Sensoren an die Überwachungseinheit 20 angeschlossen werden können. Dies kann zum Beispiel ein Schwingungssensor sein, der analog zu Sensor 15 einen weiteren Radsatz überwacht, sodass aus der Radsatzüberwachung eine Drehgestellüberwachung oder eine Fahrzeugüberwachung entsteht. Der Sensor muss aber nicht zwingend ein Schwingungssensor sein, sondern es kann beispielsweise auch ein Temperatursensor sein, der bei einem heisslaufenden Radsatzlager 13a/13b eine Alarmmeldung auslöst.

Interessant an Option 55 ist, dass mit wenig zusätzlicher Sensorik kostengünstig der Schutzbereich erweitert werden kann.

Option 32 ist eine Systemüberwachung und erkennt Mängel der Vorrichtung und meldet Abnormalitäten oder Funktionsausfall. Beispiele von Mängeln sind ein Ausfall der Stromversorgung, ein defekter Schwingungssensor oder ein Rechnerausfall.

Fig. 2 zeigt den Aufbau des Blocks Eigenfrequenzermittlung 25, wie er in Fig. 1 mehrfach eingesetzt ist. Fig. 2 ist dargestellt und beschrieben zur Ermittlung der Eigenfrequenz der der Ordnung N, gilt aber gleichermassen auch für andere Ordnungen wie beispielsweise der Ordnung M.

Das Eingangssignal von 25 ist ein Schwingungssignal im Zeitbereich, das als eines der Segmente a bis z von der Segmentierung 23 oder als vollständiges Schwingungssignal S direkt vom Analog/Digitalwandler 22 kommt.

Mittels Fourier-Transformation 251 wird das Eingangssignal in den Frequenzbereich transformiert. In der Signalaufbereitung 252 wird mittels Filterung, Normierung, Mittelung, Gewichtung, etc. das Nutzspektrum der gewählten Ordnung N (beispielsweise N=6 für die 7-Knoten-Schwingung), ermittelt und der Resonanzfrequenzbestimmung 253 zugeführt, welche daraus die aktuelle, nicht korrigierte Eigenfrequenz bestimmt. Ohne das optionale Korrekturmodul 254 wird die nicht korrigierte Eigenfrequenz unverändert als aktuelle Eigenfrequenz ausgegeben. Je nach Eingangssignal des Blocks 25 kann das fENa...fENz oder FEN' sein.

Das optionale Korrekturmodul 254 kommt zum Einsatz, wenn die nicht korrigierte Eigenfrequenz bekannten (oder erlernbaren) Einflüssen unterliegt. So kann zum Beispiel aus der nicht korrigierten Eigenfrequenz fEN mit Hilfe eines Temperatursignals y die temperaturkompensierte Eigenfrequenz fEN berechnet werden, welche von Temperaturschwankungen unabhängig ist.

Fig. 3 zeigt - stark überhöht - zwei mögliche Eigenformen 62N und 62M der angeregten Welle, welche zur Rissüberwachung benutzt werden können. Im Ruhezustand sind die Eigenformen nicht messbar, da die Anregung fehlt und das Wellenzentrum stationär ist, dargestellt als Linie 61.

Bei Fahrten über Schienenstösse und -unebenheiten, Weichen, etc. wird der Radsatz 10 durch Anregungen 65 von der Schiene her erschüttert. Diese Anregungen können sehr schwache bis sehr starke Amplituden aufweisen. Die Anregungen sind hier erwünscht, da sie die Welle in den Eigenformen zum Schwingen anregen, wodurch das Schwingungssignal analysiert werden kann. Ein Riss 64 verrät seine Anwesenheit, indem er die überwachten Eigenfrequenzen im Spektrum nach unten verschiebt.

Ein Vorteil der Erfindung ist, dass ein fest montierter Sensor die vorbeidrehende Welle kontinuierlich im Umfang auf Risse abscannen kann: Ein Riss ändert dabei seine Lage sowohl gegenüber dem Schwingungssensor 15 und seiner Messrichtung, wie auch gegenüber der Anregung 65 und ihrer Kraftrichtung. Die damit verbundenen Änderungen des Schwingverhaltens der Welle können erfasst und ausgewertet werden.

Fig. 4 zeigt normierte Resonanzkurven der Eigenformen der Ordnungen N und M im Spektrum. Die Amplituden sind normiert, um den grossen Dynamikumfang der Anregungen zu beherrschen.

Die Abszissenwerte sind doppelt beschriftet: Die oberen Beschriftungen (fENmin, fENmax, fEMmin, fEMmax) zeigen die Variante, bei der die Resonanzfrequenzen-Verschiebung in Abhängigkeit des Drehwinkels überwacht wird, korrespondierend mit Baugruppe 50 in Fig. 1.

Die unteren Werte (fEN', fRN', fEM', fRM') zeigen die Variante, bei der die Resonanzfrequenz-Verschiebung in Abhängigkeit der Zeit überwacht wird, korrespondierend mit Baugruppe 52 in Fig.1.

Kurven 67N und 67M könnten von einer Welle ohne Riss stammen, während bei 66N und 66M ein Riss vorliegt. Die damit verbundenen Verschiebungen der Resonanzfrequenzen um ΔfEN, ΔfEM resp. ΔfEN', ΔfEM' macht sich diese Erfindung zu Nutzen.

Fig. 5a zeigt ein Polardiagramm der rotationsasymmetrischen Eigenfrequenz fEN als Funktion des Raddrehwinkels φ bei einer angerissenen Welle. Infolge des Risses sind in der Regel die Steifigkeit sowie die Eigenfrequenz rotationsasymmetrisch. In polarer Darstellung zeigt sich die Eigenfrequenz als eine Ellipse mit den Halbachsen fENmax und fENmin und der Differenz ΔfEN, welche der Differenz zwischen der maximal (fENmax) und minimal (fENmin) gemessenen Eigenfrequenz entspricht. Das Verfahren nutzt die Differenz der Halbachsen, also die Eigenfrequenz-Differenz ΔfEN, zur Rissbeurteilung.

Fig. 5b zeigt ein kartesisches Diagramm der rotationsasymmetrischen Eigenfrequenz fEN als Funktion des Raddrehwinkels φ bei angerissener Welle. Die Vorrichtung gemäss der in Fig. 1, Baugruppe 50 gezeigten Variante teilt eine volle Radumdrehung in Segmente ein. Für jedes Segment wird die Eigenfrequenz (hier: fENa bis fENz) bestimmt und daraus die Eigenfrequenz Differenz ΔfEN berechnet.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

Bezugszeichenliste

| | |
|---|---|
| 10 | Radsatz |
| 11a, 11b | Räder |
| 12 | Radsatz-Welle |
| 13a, 13b | Radsatzlager |
| 14 | Getriebe (falls vorhanden) |
| 15 | Schwingungssensor (verschiedene Funktionsprinzipen sind möglich) |
| 16 | einer der alternativen Montageorte für Schwingungssensor 15 |
| 17 | optionaler, zusätzlicher Schwingungssensor |
| 18a, 18b | Schienen |
| 20 | Überwachungseinheit |
| 21 | Vorfilter zur Vorfilterung des Schwingungssignals |
| 22 | Analog/Digitalwandler |
| 23 | Segmentierungseinheit zur φ-abhängigen Segmentierung von S |
| 24 | Ermittlung des Raddrehwinkels φ aus S oder durch direkte Messung |
| 25 | Ermittlung der Resonanzfrequenz einer Eigenform aus den Signalsegmenten a bis z oder dem vollständigen Signal S Interne Details von 25 siehe in Fig. 2 |
| 251 | Fourier-Transformation |
| 252 | Signalaufbereitung |
| 253 | Resonanzfrequenzbestimmung |
| 254 | optionale Korrektur der Eigenfrequenz mittels y |
| 26 | Minimal- /Maximalwert-Selektor |
| 27 | Subtrahierer |
| 28 | Langzeitspeicher einer früher ermittelten Referenz-Eigenfrequenz fRN' |
| 30 | optionale Skalierung von ΔfEN in anwenderfreundliche Masseinheiten |
| 31 | optionale Beurteilung von ΔfEN zur Ansteuerung der Ampel 44 |
| 32 | optionale Systemüberwachung |
| 40 | Meldeeinheit mit Beispielen für die weitere Verwendung von ΔfEN, ΔfEM, ΔfEN' oder ΔfEM' |
| 41 | Direktanzeige von ΔfEN in [Hz], beispielsweise 12 Hz |
| 42 | Anzeige von ΔfEN in [%] vom zulässigen Wert, beispielsweise 78% |
| 43 | Trendanzeige zur Visualisierung des zeitlichen Verlaufs von ΔfEN |
| 44 | mögliche Rissanzeige für den Lokführer als Ampel (rot-gelb-grün) |
| 50 | Baugruppe zur Ermittlung von ΔfEN |
| 51 | optionale Ermittlung(en) von ΔfEM weiterer Eigenformen |
| 52 | alternative/ergänzende Baugruppe zur Ermittlung von ΔfEN' |
| 53 | optionale Vorrichtung(en) weiterer Eigenformen ΔfEM' |
| 54 | optionale Überwachung(en) auf weitere Schadensarten |
| 55 | optionale Überwachung(en) weiterer Sensoren für Schwingungen oder für andere physikalische Grössen |

| 61 | Wellenzentrum (Drehachse) im Ruhezustand |
| 62N, 62M | mögliche Eigenformen (Verlauf des Wellenzentrums im Resonanzfall, in stark überhöhter Darstellung) |
| 64 | möglicher Riss |
| 65 | mögliche Anregung der Eigenformen von der Schiene her |
| 66N, 66M | Resonanzkurven für eine angerissene Welle |
| 67N, 67M | Resonanzkurven für die gleiche Welle ohne Riss |
| a, b, ... z | Indizes der Winkel- resp. Zeit-Segmente von S |
| N, M | Indizes der N-ten, M-ten Eigenform |
| f | Frequenz |
| fE | Eigenfrequenz einer Eigenform |
| fEN, fEM | Eigenfrequenzen der N-ten und M-ten Eigenformen |
| fENa, ..., fENz | Eigenfrequenzen (der N-ten Eigenform) der Segmente a, b, ... z |
| fENmin, fENmax | minimale und maximale Eigenfrequenzen (der N-ten Ordnung) |
| ΔfE | Eigenfrequenz-Differenz einer Eigenform |
| ΔfEN, ΔfEM | Eigenfrequenz-Differenzen der Ordnungen N und M |
| fRN' | Referenz-Eigenfrequenz Eigenform (der N-ten Ordnung) |
| ΔfEN' | Eigenfrequenzverschiebung der Eigenform (der N-ten Ordnung) |
| S | digitalisiertes Schwingungssignal |
| y | bekannter oder erlernter Einfluss auf eine Eigenfrequenz |
| φ | Raddrehwinkel |

## Patentansprüche

1. Verfahren zur Früherkennung eines Risses in einem Radsatz (10) für ein Schienenfahrzeug, wobei ein fest am Schienenfahrzeug montierter, also nicht mit dem Radsatz mitrotierender Messaufnehmer (15) aufgrund einer Erschütterung des Radsatzes (10) ein Messsignal erzeugt, **dadurch gekennzeichnet, dass** aus dem Messsignal eine Verschiebung der Eigenfrequenz einer Eigenform höherer Ordnung des Radsatzes (10) als Mass zur Feststellung oder Beurteilung des Risses ermittelt wird, wobei die Erschütterung, welche vom Fahrbetrieb oder von einer Prüfeinrichtung auf den Radsatz (10) abgegeben wird, zur Anregung der Eigenform höherer Ordnung genutzt wird.

2. Das Verfahren nach Anspruch 1, wobei der Radsatz (10) rotationssymmetrisch ausgebildet ist, wobei die Verschiebung der Eigenfrequenz von der Eigenfrequenzrotationssymmetrie bezüglich des Raddrehwinkels als Mass zur Feststellung oder Beurteilung des Risses verwendet wird.

3. Das Verfahren nach einem der Ansprüche 1 oder 2, wobei die Verschiebung der Eigenfrequenz als zeitliche Veränderung gegenüber der früher ermittelten Eigenfrequenz als Mass zur Feststellung oder Beurteilung des Risses verwendet wird.

4. Das Verfahren nach einem der vorhergehenden Ansprüche, wobei eine Eigenform höherer Ordnung zur Rissdetektion verwendet wird, deren Resonanzfrequenz im Frequenzbereich über den antriebstypischen Anregungen liegt.

5. Das Verfahren nach einem der vorhergehenden Ansprüche, wobei die Prüfeinrichtung eine im Werk befindliche, ortsgebundene Einrichtung ist, welche mechanische Schwingungen an den Radsatz (10) als Prüfobjekt abgibt.

6. Das Verfahren nach einem der vorhergehenden Ansprüche, wobei gleichzeitig Eigenformen unterschiedlicher Ordnungen zur lückenlosen Abdeckung des Radsatzes (10) in axialer Richtung ausgewertet werden.

7. Das Verfahren nach einem der vorhergehenden Ansprüche, wobei der Riss erkannt wird, bevor am Radsatz (10) plastische Verformungen auftreten.

8. Das Verfahren nach einem der Ansprüche 1, 3 bis 7, wobei das Mass der Beschädigung des Radsatzes (10) ohne Kenntnisse eines früheren Zustandes feststellbar ist.

9. Das Verfahren nach einem der vorhergehenden Ansprüche, wobei ein Riss an einer beliebigen Position oder Richtung im oder auf dem Radsatz (10) detektiert werden kann.

10. Vorrichtung zur Durchführung eines Verfahrens nach einem der vorhergehenden Ansprüche zur Überwachung oder Zustandsdiagnose eines Radsatzes (10), enthaltend einen nicht mit dem Radsatz mitrotierenden Messaufnehmer (15), der als Schwingungssensor ausgebildet ist, welcher eingerichtet ist, bei einer Anregung ein Schwingungssignal an eine Überwachungseinheit (20) abzugeben, **dadurch gekennzeichnet, dass** in der Überwachungseinheit (20) die Eigenfrequenz-Differenz einer Eigenform des Radsatzes höherer Ordnung ermittelbar ist und zur Feststellung oder Beurteilung des Risses dient.

11. Vorrichtung nach Anspruch 10, wobei die Eigenfrequenz-Differenz in einer ersten Baugruppe (50) als die Differenz ΔfE zwischen der maximalen und der minimalen, in Abhängigkeit des Raddrehwinkel gemessenen Eigenfrequenz (fE$_{max}$, fE$_{min}$) oder in einer zweiten Baugruppe (52) als die Differenz ΔfE' zu einer früher ermittelten Eigenfrequenz derselben Ordnung verwendet werden kann.

12. Die Vorrichtung nach einem der Ansprüche 10 oder 11, wobei ein Radsatz mit einem einzigen Messaufnehmer überwachbar ist.

13. Die Vorrichtung nach einem der vorhergehenden Ansprüche 10 bis 12, wobei der Schwingungssensor (15) derart eingerichtet ist, dass verschiedene Eigenformen gleichzeitig überwacht werden können.

14. Verwendung der Vorrichtung nach einem der vorhergehenden Ansprüche 10 bis 13 zur Überwachung eines Radsatzes (10) oder Drehgestells oder Fahrzeuges oder Gleisanlage auf eine Schadensart aus der Gruppe der Risse, Radbeschädigungen, Radsatzlager- oder Getriebeschäden, Entgleisungen, Gleisbeschädigungen.

15. Verwendung der Vorrichtung nach einem der vorhergehenden Ansprüche 10 bis 13 zur Überwachung eines im Betrieb befindlichen Schienenfahrzeuges oder zur Kontrolle eines ausser Betrieb befindlichen Schienenfahrzeuges mittels einer üblicherweise ortsfesten Prüfeinrichtung, wobei die Prüfeinrichtung mechanische Schwingungen zur Anregung von Eigenschwingungen auf den Radsatz als Prüfobjekt abgibt.

**Claims**

1. A method for the early detection of a crack in a wheelset (10) for a rail vehicle, wherein a sensor (15) fixedly mounted on the rail vehicle, i.e. not rotating with the wheelset, generates a measurement signal due to a vibration of the wheelset (10), **characterized in that** a shift in the natural frequency of a higher order normal mode of the wheelset (10) is determined from the measurement signal as a measure for determining or assessing the crack, whereby the vibration emitted by the driving operation or by a test device on the wheelset (10) is used to excite the normal mode of higher order.

2. The method of claim 1, wherein the wheel set (10) is configured to be rotationally symmetrical, wherein the shift of the natural frequency with respect to the natural frequency rotational symmetry in relation to the wheel rotation angle is used as a measure for determining or assessing the crack.

3. The method of one of claims 1 or 2, wherein the shift in the natural frequency as a temporal change with respect to the previously determined natural frequency is used as a measure for determining or assessing the crack.

4. The method of one of the preceding claims, wherein a higher order normal mode is used for crack detection, the resonant frequency of which lies in the frequency range above the typical excitations by the drive.

5. The method of one of the preceding claims, wherein the testing device is a stationary device located in the factory, which emits mechanical vibrations to the wheel set (10) as the test object.

6. The method of one of the preceding claims, wherein normal modes of different orders are evaluated contemporaneously for seamless coverage of the wheelset (10) in an axial direction.

7. The method of one of the preceding claims, wherein the crack is detected before plastic deformations occur on the wheelset (10).

8. The method of one of claims 1, 3 to 7, wherein the degree of damage to the wheelset (10) can be determined without knowledge of a previous state.

9. The method of one of the preceding claims, wherein a crack can be detected at any position or direction in or on the wheelset (10).

10. Device for performing a method according to one of the preceding claims for monitoring or diagnosing the condition of a wheelset (10), containing a sensor (15) which does not rotate with the wheelset and which is designed as a vibration sensor which is configured to transmit a vibration signal upon excitation to a monitoring unit (20), **characterized in that** the natural frequency difference of a normal mode of the wheelset of a higher-order can be determined by the monitoring unit (20) and is used to determine or assess the crack.

11. The device of claim 10, wherein the natural frequency difference in a first assembly (50) can be used as the difference ΔfE between the maximum and the minimum natural frequency measured as a function of the wheel rotation angle (fE$_{max}$, fE$_{min}$) or in a second assembly (52) as the difference ΔfE' to a previously determined natural frequency of the same order.

12. The device of one of claims 10 or 11, wherein a wheelset can be monitored with a single sensor.

13. The device according to one of claims 10 to 12, wherein the vibration sensor (15) is configured in such a way that different normal modes can be monitored simultaneously.

14. Use of the device according to one of claims 10 to 13 for monitoring a wheelset (10) or bogie or vehicle or track system for a type of damage selected from the group consisting of cracks, wheel damage, wheel set bearing or gear damage, derailment, track damage.

15. Use of the device of one of claims 10 to 13 for monitoring a rail vehicle in operation or for checking a rail vehicle not in operation by means of a usually stationary test device, wherein the test device emits mechanical vibrations to excite natural vibrations on the wheelset as the test object.

**Revendications**

1. Procédé de détection précoce d'une fissure dans un essieu (10) pour un véhicule ferroviaire, dans lequel un capteur (15) monté fixe sur le véhicule ferroviaire, c'est-à-dire ne tournant pas avec l'essieu, génère un signal de mesure dû à une vibration de l'essieu (10), **caractérisé en ce que** un décalage de la fréquence naturelle d'un mode normal d'ordre supérieur de l'essieu (10) est déterminé à partir du signal de mesure comme mesure pour déterminer ou évaluer la fissure, **en ce que** la vibration émise sur l'essieu (10) par l'opération de conduite ou par un dispositif d'essai est utilisée pour exciter le mode normal d'ordre supérieur.

2. Le procédé selon la revendication 1, dans lequel l'essieu (10) est symétrique en rotation, le décalage de la fréquence naturelle de la symétrie de rotation de fréquence naturelle par rapport à l'angle de rotation de la roue étant utilisé comme mesure pour déterminer ou évaluer la fissure.

3. Le procédé selon l'une des revendications 1 ou 2, dans lequel le décalage de la fréquence naturelle est utilisé comme un changement temporel par rapport à la fréquence naturelle préalablement déterminée comme mesure pour déterminer ou évaluer la fissure.

4. Le procédé selon l'une quelconque des revendications précédentes, dans lequel un mode normal d'ordre supérieur est utilisé pour la détection de fissures, dont la fréquence de résonance se situe dans la plage de fréquences au-dessus des excitations typiques d'entraînement.

5. Le procédé selon l'une quelconque des revendications précédentes, dans lequel le dispositif de test est un dispositif stationnaire situé en usine, qui émet des vibrations mécaniques sur l'essieu (10) en tant qu'objet de test.

6. Le procédé selon l'une quelconque des revendications précédentes, dans lequel des modes normaux d'ordres différents sont évalués en même temps pour une couverture homogène de l'essieu (10) dans la direction axiale.

7. Le procédé selon l'une quelconque des revendications précédentes, dans lequel la fissure est détectée avant que des déformations plastiques n'apparaissent sur l'essieu (10).

8. Le procédé selon l'une quelconque des revendications 1, 3 à 7, dans lequel le degré d'endommagement de l'essieu (10) peut être déterminé sans connaissance d'un état antérieur.

9. Le procédé selon l'une quelconque des revendications précédentes, dans lequel une fissure peut être détectée à n'importe quelle position ou direction dans ou sur l'essieu (10).

10. Dispositif pour mettre en œuvre un procédé selon l'une des revendications précédentes pour surveiller ou diagnostiquer l'état d'un essieu (10), contenant un capteur (15) qui ne tourne pas avec l'essieu et est conçu comme un capteur de vibrations qui est configuré pour générer un signal de vibration lorsqu'il est excité à une unité de surveillance (20), **caractérisée en ce que** la différence de fréquence naturelle d'un mode normal d'ordre supérieur de l'essieu peut être déterminée dans l'unité de surveillance (20) et est utilisée pour déterminer ou évaluer la fissure.

11. Le dispositif selon la revendication 10, **caractérisé en ce que** la différence de fréquence naturelle dans un premier ensemble (50) peut être utilisée comme la différence $\Delta fE$ entre la fréquence naturelle maximale et la fréquence naturelle minimale mesurée en fonction de l'angle de rotation de la roue ($fE_{max}$, $fE_{min}$) ou dans un deuxième ensemble (52) comme la différence $\Delta fE'$ à une fréquence naturelle préalablement déterminée du même ordre.

12. Le dispositif selon l'une des revendications 10 ou 11, dans lequel un essieu peut être surveillé avec un seul capteur.

13. Le dispositif selon l'une des revendications 10 à 12 précédentes, dans lequel le capteur de vibrations (15) est configuré de telle manière que différents modes normaux puissent être surveillés simultanément.

14. Utilisation du dispositif selon l'une des revendications 10 à 13 précédentes pour surveiller un essieu (10) ou un bogie ou un véhicule ou un système de chenilles pour un type de dommage sélectionné du groupe de fissures, dommage de roue, roulement de train de roues ou dommage d'engrenage, déraillement, dommage de voie.

**15.** L'utilisation du dispositif selon l'une des revendications 10 à 13 précédentes pour surveiller un véhicule ferroviaire en fonctionnement ou pour contrôler un véhicule ferroviaire non en fonctionnement au moyen d'un dispositif de test habituellement stationnaire, le dispositif de test émettant des vibrations mécaniques pour exciter des vibrations naturelles sur l'essieu en tant qu'objet de test.

Fig. 1

Fig. 2

Fig. 3

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19837554 A1
- DE 10022684 A1
- DE 19827271 A1
- WO 0060322 A1
- DE 10062602 B4

- DE 10062602 A1
- US 7640139 B2
- US 20130312524 A1
- US 20160144876 A1
- WO 2010057623 A2